# EUROPÄISCHE PATENTANMELDUNG

(11) **EP 1 199 212 A2**
(43) Veröffentlichungstag der Anmeldung: **24.04.2002**
(21) Anmeldenummer: 01123931.6
(22) Anmeldetag: 06.10.2001
(51) Int. Cl.: B60N 2/10

(54) **Entriegelungsmechanik für einen Fahrzeugsitz**

(30) Priorität: 20.10.2000 DE 10052090
(71) Anmelder: Keiper GmbH & Co., 67657 Kaiserslautern (DE)
(72) Erfinder: Bingert, Thomas, 67737 Olsbrücken (DE)
(74) Vertreter: Patentanwälte Hosenthien-Held und Dr. Held

(57) **Zusammenfassung**

2. Eine Entriegelungsmechanik (11, 20, 24) für einen Fahrzeugsitz (1), insbesondere für einen Kraftfahrzeugsitz, welcher ein mit einer Fahrzeugstruktur verbindbares Sitzteil (2) und eine Rückenlehne (3) aufweist, die mittels Gelenkbeschlägen (5) relativ zum Sitzteil (2) schwenkbar und verriegelbar ist, weist eine Lehnenentriegelung (11) zum Entriegeln der Gelenkbeschläge (5) und ein manuell bewegliches Betätigungselement (20) zum Auslösen der Lehnenentriegelung (11) auf, welches mit einer zweiten Bewegungsmöglichkeit eine Bodenentriegelung (24) auslöst, die das Sitzteil (2) wenigstens teilweise von der Fahrzeugstruktur trennt.

## Beschreibung

Die Erfindung betrifft eine Entriegelungsmechanik für einen Fahrzeugsitz, insbesondere für einen Kraftfahrzeugsitz, mit den Merkmalen des Oberbegriffs des Anspruches 1.

Bei zweitürigen Kraftfahrzeugen sind Fahrzeugsitze bekannt, deren Rückenlehnen nach Betätigung einer Entriegelungsmechanik nach vorne freischwenken können, um den Zugang zum Fond zu erleichtern. Bei Multifunktionsfahrzeugen, z.B. Vans, können die Rückenlehnen in Tischstellungen geklappt werden oder der gesamte Fahrzeugsitz von einer Sitzstellung in eine zusammengeklappte Packagestellung überführt werden, und zwar jeweils mittels Betätigung einer Entriegelungsmechanik. Hierbei bleiben noch Wünsche offen, insbesondere hinsichtlich des Bedienkomforts und der Bediensicherheit.

Der Erfindung liegt die Aufgabe zu Grunde, eine Entriegelungsmechanik der eingangs genannten Art zu verbessern. Diese Aufgabe wird erfindungsgemäß durch eine Entriegelungsmechanik mit den Merkmalen des Anspruches 1 und durch einen Fahrzeugsitz mit den Merkmalen des Anspruches 11 gelöst. Vorteilhafte Ausgestaltungen sind Gegenstand der Unteransprüche.

Dadurch, daß das Betätigungselement für die Lehnenentriegelung eine zweite Bewegungsmöglichkeit zum Auslösen einer Bodenentriegelung aufweist, wobei die Bodenentriegelung das Sitzteil wenigstens teilweise von der Fahrzeugstruktur trennt, können mit einem einzigen Bedienelement verschiedene Funktionen des Fahrzeugsitzes ausgelöst werden, was eine komfortable, einfache, übersichtliche und sichere Bedienung gewährleistet. Sofern der Fahrzeugsitz über eine Packagestellung verfügt, kann diese durch Betätigung eines einzigen Bedienelementes erreicht werden, so daß die Erfindung vorzugsweise bei solchen Fahrzeugsitzen, d.h. in der Regel bei Beifahrersitzen und Sitzen in mittleren Sitzreihen und hinteren Sitzreihen, Anwendung findet, aber nicht auf solche beschränkt ist. Ein gemeinsames Betätigungselement für die Lehnenentriegelung und die Bodenentriegelung bietet eine höhere Bedienlogik, da diese beiden Entriegelungen beim Übergang in die Packagestellung zeitlich unmittelbar hintereinander zu betätigen sind, wobei die zeitliche Abfolge vorzugsweise durch geeignete Abfragemittel geprüft und gesteuert werden kann.

Für eine definierte Handhabung sind die beiden Bewegungsmöglichkeiten des Betätigungselementes vorzugsweise von einander entkoppelt, so daß die Lehnenentriegelung und die Bodenentriegelung ganz oder weitgehend unabhängig voneinander mit dem gleichen Betätigungselement betätigbar sind. Es ist dabei von Vorteil, wenn zuerst die entriegelte Rückenlehne umgeklappt sein muß und im Falle eines längsverschiebbaren Fahrzeugsitzes sich dieser in einer definierten Längsposition, beispielsweise in der hintersten Längsposition oder in der Designposition, befinden muß, bevor sich die Bodenentriegelung entriegeln läßt. Hierfür können geeignete Abfragemittel, beispielsweise in Form von Tastern und Steuerkurven vorgesehen sein, die sicherstellen, daß die Bodenentriegelung nicht in einer Sitzstellung oder gar bei Gebrauch des Sitzes entriegelbar ist.

Die Betätigung der Lehnenentriegelung und der Bodenentriegelung kann beispielsweise durch Wellen erfolgen, welche nur bei einer der beiden Bewegungsmöglichkeiten des Betätigungselementes in Wirkverbindung miteinander stehen, beispielsweise über drehfest auf den Wellen angeordnete Hebel, die in Eingriff gelangen können und durch deren Relativabstand sich die Längsposition abfragen läßt, wobei das Betätigungselement einer von beiden Wellen zugeordnet ist. Aus Platzgründen und zum Schutz ist eine der beiden Wellen vorzugsweise innerhalb eines Rohres oder einer Verbindungstraverse angeordnet, welches bzw. welche ein Bauteil der Struktur des Sitzteiles bildet, wobei diese Bauteil dann eine radiale Öffnung für einen der Hebel aufweist, die möglichst klein ist, um das Bauteil nicht zu sehr zu schwächen.

In einer bevorzugten Ausführungsform ist das Betätigungselement als ein beweglicher, beispielsweise drehbarer, Handhebel ausgebildet, welcher bei einer Bewegung aus einer Ruhestellung heraus in eine erste Betätigungsrichtung die Lehnenentriegelung auslöst und bei einer Bewegung aus der Ruhestellung heraus in eine zweite Betätigungsrichtung die Bodenentriegelung auslöst, wobei die letztere Funktion bei nicht geklappter Lehne vorzugsweise gesperrt ist. Bei einer drehbaren Ausbildung entsprechen die zwei Betätigungsrichtungen den zwei entgegengesetzten Drehrichtungen. Die Entkopplung der beiden Drehrichtungen kann durch Leerhübe des Handhebels verwirklicht sein, beispielsweise durch Schlitz-Zapfen-Führungen, so daß auch die radiale Öffnung im Rohr klein gehalten werden kann.

Im folgenden ist die Erfindung anhand eines in der Zeichnung dargestellten Ausführungsbeispiels näher erläutert. Es zeigen
- Fig. 1: eine perspektivische Teilansicht eines beispielhaft ausgeführten Fahrzeugsitzes ohne Polsterung,
- Fig. 2: eine perspektivische Ansicht von Teilen des Ausführungsbeispiels, und

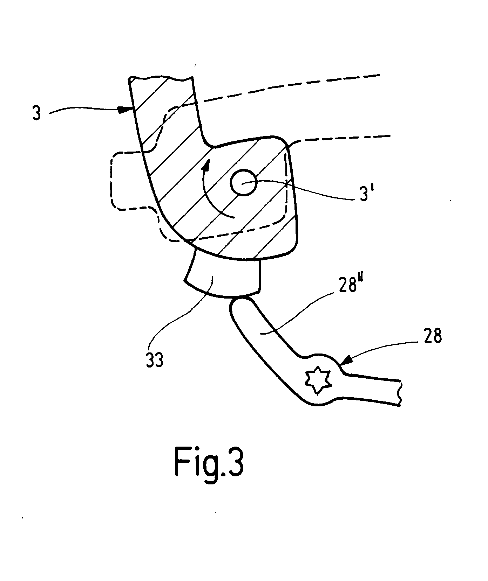

- Fig. 3: eine schematische Darstellung eines Teilbereichs einer Rückenlehne in aufrechter Stellung und gestrichelt in nach vorne geneigter Stellung.

Ein Fahrzeugsitz 1 ist als Rücksitz für einen sogenannten Van ausgebildet und weist ein mit der Fahrzeugstruktur des Vans lösbar verbundenes Sitzteil 2 und eine um schwenkbare Rückenlehne 3 auf. Zwei Gelenkbeschläge 5, deren jeweilige Beschlagunterteile 7 an der Struktur des Sitzteils 2 angebracht sind, tragen mit ihren jeweiligen Beschlagoberteilen 9 die Lehnenstruktur der Rückenlehne 3. Für die nachfolgenden Richtungsangaben wird davon ausgegangen, daß die Rückenlehne 3 am Sitzteil 2 in Fahrtrichtung hinten angeordnet ist. Das Sitzteil 2 ist so ausgebildet, daß sein oberer Teil samt Rückenlehne 3 durch einen an sich bekannten Längseinsteller in Längsrichtung des Vans verschiebbar und verriegelbar ist.

Die als Rastbeschläge oder als Taumelbeschläge ausgebildeten Gelenkbeschläge 5 sind mittels einer Lehnenentriegelung 11 entriegelbar, um - im Falle einer Ausbildung als Rastbeschlag - die Neigung der Rückenlehne 3 einzustellen oder um - in beiden Fällen - die Rückenlehne 3 um eine Lehnendrehachse 3' auf das Sitzteil 2 zu klappen. Die Lehnenentriegelung 11 weist hierzu eine profilierte, obere Übertragungswelle 13 auf, welche innerhalb einer horizontal und quer zur Fahrtrichtung angeordneten, hohlen Verbindungstraverse 15 drehbar gelagert ist. Die Verbindungstraverse 15 ist stirnseitig mit den jeweiligen Beschlagunterteilen 7 verschweißt und bildet einen Teil der lastaufnehmenden Struktur des Sitzteils 2. Die obere Übertragungswelle 13 trägt im Bereich jedes Endes drehfest eine Entriegelungsscheibe 17, welche bei einer Drehung in nicht näher dargestellter Weise innerhalb des zugehörigen Gelenkbeschlags 5 über einen Entriegelungsbolzen 19 schwenkbare Nocken betätigt, welche eine das Beschlagoberteil 9 verriegelnde Sperrklinke öffnen.

An dem nach außen gewandten Ende, welches sich im Ausführungsbeispiel auf der linken Seite des Fahrzeugsitzes 1 befindet, ist als Betätigungselement ein einarmiger Handhebel 20 drehfest auf der oberen Übertragungswelle 13 angeordnet. Vorzugsweise ist der Handhebel 20 einstückig mit der auf dieser Seite angeordneten Entriegelungsscheibe 17 ausgebildet. Durch manuelle Betätigung des Handhebels 20, d.h. durch eine Schwenkbewegung, welche im Ausführungsbeispiel nach oben erfolgt, wird die obere Übertragungswelle 13 gedreht, so daß auf beiden Seiten des Fahrzeugsitzes 1 die Gelenkbeschläge 5 gleichzeitig entriegelt werden. Verschiedene Federbelastungen sorgen dafür, daß nach dem Loslassen des Handhebels 20 die Gelenkbeschläge 5 wieder selbsttätig verriegeln und die aktuelle Einstellung der Rückenlehne 3 fixieren. Ein Langloch 17' in der Entriegelungsscheibe 17 bewirkt, daß bei einer Schwenkbewegung des Handhebels 20 nach unten die Entriegelungsscheibe 17 aufgrund eines Leerhubs den Entriegelungsbolzen 19 nicht mitnimmt, d.h. der Gelenkbeschlag 5 verriegelt bleibt.

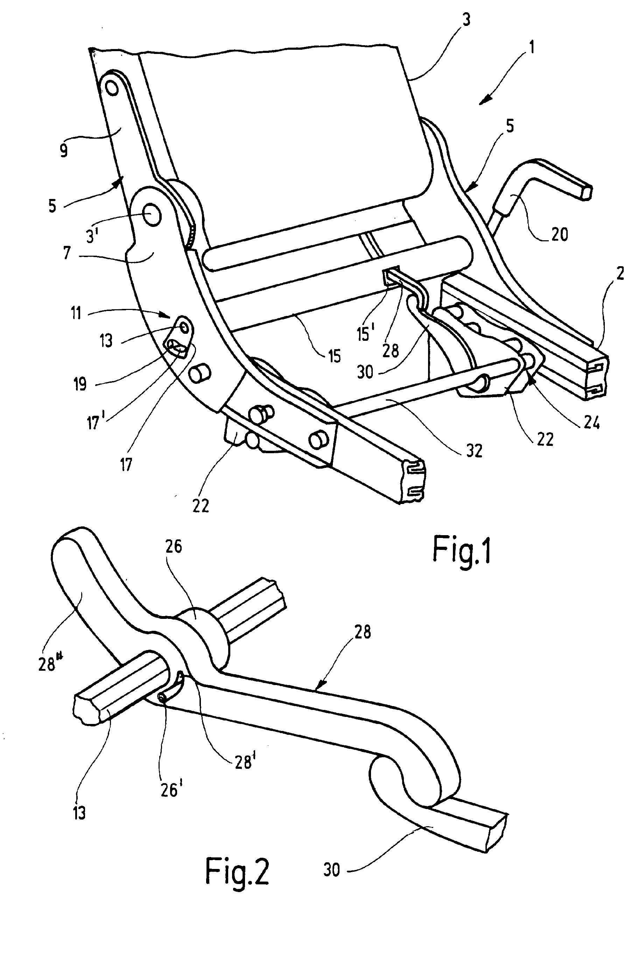

Der Fahrzeugsitz 1 weist an seinen beiden hinteren Ecken am Sitzteil 2 je einen hinteren Fuß 22 auf, welcher mit dem Fahrzeugboden als Teil der Fahrzeugstruktur verriegelt ist, beispielsweise mittels Sperrklinken im hinteren Fuß 22 und Bolzen im Fahrzeugboden. Die hinteren Füße 22 bleiben bei einer eventuellen Längsverschiebung des Fahrzeugsitzes 1 mit dem Fahrzeugboden verriegelt. Sie können jedoch mit einer Bodenentriegelung 24 entriegelt werden, um beispielsweise das Sitzteil 2 in eine Packagestellung hochklappen zu können oder um den Fahrzeugsitz 1 als Ganzes entnehmen zu können. Für die Bodenentriegelung 24 ist auf der oberen Übertragungswelle 13 ein scheibenförmiger Mitnehmer 26 drehfest angebracht. Neben dem Mitnehmer 26 ist ein einarmiger, erster Hebel 28 angeordnet, welcher drehbar auf der oberen Übertragungswelle 13 sitzt und durch eine Öffnung 15' in der Verbindungstraverse 15 radial herausragt. Der Mitnehmer 26 weist einen parallel zur oberen Übertragungswelle 13 angeordneten Zapfen 26' auf, welcher in einen Schlitz 28' des ersten Hebels 28 greift, wie in Fig. 2 dargestellt.

Im verriegelten Zustand des Fahrzeugsitzes 1 in dessen hinterster Längsposition liegt der erste Hebel 28 mit seinem freien Ende auf dem freien Ende eines ebenfalls einarmig ausgebildeten, zweiten Hebels 30 auf. Der zweite Hebel 30 sitzt drehfest auf einer unteren Übertragungswelle 32, welche zwischen den beiden hinteren Füßen 22 verläuft und parallel zur oberen Übertragungswelle 13 ausgerichtet ist. Die untere Übertragungswelle 32 steht in Wirkverbindung mit nicht näher dargestellte Nocken, welche bei einer Schwenkbewegung eine Sperrklinke lösen, die den hinteren Fuß 22 mit dem Fahrzeugboden verriegelt. Daher wird die Bodenentriegelung 24 betätigt, indem bei einer Drehung des ersten Hebels 28, der dann auf den zweiten Hebel 30 drückt, welcher wiederum die untere Übertragungswelle 32 dreht, letztere dann beide hintere Füße 22 gleichzeitig entriegelt.

Während der erste Hebel 28 zu den Bauteilen des Sitzteils 2 gehört, welche bei einer Längsverschiebung des Fahrzeugsitzes 1 mitverschoben werden, gehört die untere Übertragungswelle 32 samt zweitem Hebel 30 zu den Bauteilen des Sitzteils 2, welche nicht mitverschoben werden. In anderen Längspositionen als der hintersten liegt daher der erste Hebel 28 nicht auf dem zweiten Hebel 30 auf, so daß die Bodenentriegelung 24 nicht betätigbar ist. Damit die Bodenentriegelung 24 auch nur dann betätigbar ist, wenn die Rückenlehne 3 vorgeklappt ist, ist der erste Hebel 28 zusätzlich mit einem nach hinten weisenden Tastfinger 28" und die Rückenlehne 3 mit einem um die Lehnendrehachse 3' gekrümmten und etwa unterhalb derselben angeordneten Kurvensegment 33 versehen. Solange die Rückenlehne 3 sich in einer nahezu aufrecht geneigten Stellung befindet, liegt der Tastfinger 28" am Kurvensegment 33 an. Eine Schwenkbewegung des ersten Hebels 28 wird dann gesperrt. Wird hingegen die Rückenlehne 3 vollständig nach vorne geklappt, so entfernt sich das Kurvensegment 33 vollständig vom Tastfinger 28". Die Bodenentriegelung 24 kann nun mittels der oben beschriebenen Schwenkbewegung des ersten Hebels 28 entriegelt werden.

Zur Vergrößerung der Ladefläche ist der Fahrzeugsitz 1 in eine Packagestellung überführbar. Hierzu wird zunächst durch eine Schwenkbewegung des Handhebels 20 nach oben die oben beschriebene Lehnenentriegelung 11 betätigt, wobei durch eine Leerhub-Bewegung des Zapfens 26' innerhalb des Schlitzes 28' der erste Hebel 28 und damit die Bodenentriegelung 24 unbetätigt bleibt. Nun wird die Rückenlehne 3 nach vorne auf das Sitzteil 2 geklappt. Dann wird durch eine Schwenkbewegung des Handhebels 20 nach unten die Bodenentriegelung 24 betätigt, wobei durch die Bewegung der Langlöcher 17' relativ zu den Entriegelungsbolzen 19 jetzt die Lehnenentriegelung 11 unbetätigt bleibt. Das Sitzteil 2 wird dann, mit der Rückenlehne 3 voraus, um seine vorderen Füße nach vorne in die Packagestellung geschwenkt.

### Bezugszeichenliste

- 1: Fahrzeugsitz
- 2: Sitzteil
- 3: Rückenlehne
- 3': Lehnendrehachse
- 5: Gelenkbeschlag
- 7: Beschlagunterteil
- 9: Beschlagoberteil
- 11: Lehnenentriegelung
- 13: obere Übertragungswelle
- 15: Verbindungstraverse
- 15': Öffnung
- 17: Entriegelungsscheibe
- 17': Langloch
- 19: Entriegelungsbolzen
- 20: Handhebel
- 22: hinterer Fuß
- 24: Bodenentriegelung
- 26: Mitnehmer
- 26': Zapfen
- 28: erster Hebel
- 28': Schlitz
- 28": Tastfinger
- 30: zweiter Hebel
- 32: untere Übertragungswelle
- 33: Kurvensegment

## Patentansprüche

1. Entriegelungsmechanik für einen Fahrzeugsitz, insbesondere für einen Kraftfahrzeugsitz, welcher ein mit einer Fahrzeugstruktur verbindbares Sitzteil (2) und eine Rückenlehne (3) aufweist, die mittels Gelenkbeschlägen (5) relativ zum Sitzteil (2) schwenkbar und verriegelbar ist, wobei die Entriegelungsmechanik (11, 20, 24) eine Lehnenentriegelung (11) zum Entriegeln der Gelenkbeschläge (5) und ein manuell bewegliches Betätigungselement (20) zum Auslösen der Lehnenentriegelung (11) aufweist, **dadurch gekennzeichnet, daß** das Betätigungselement (20) eine zweite Bewegungsmöglichkeit zum Auslösen einer Bodenentriegelung (24) aufweist, wobei die Bodenentriegelung (24) das Sitzteil (2) wenigstens teilweise von der Fahrzeugstruktur trennt.

2. Entriegelungsmechanik nach Anspruch 1, **dadurch gekennzeichnet, daß** Abfragemittel (28", 33, 28, 30) für die Neigung der Rückenlehne (3) und/oder für die Längsposition des Fahrzeugsitzes (1) vorgesehen sind, aufgrund derer die die Bodenentriegelung (24) nur in bestimmten Stellungen betätigbar ist.

3. Entriegelungsmechanik nach Anspruch 1 oder 2, **dadurch gekennzeichnet, daß** die beiden Bewegungsmöglichkeiten des Betätigungselementes (20) von einander entkoppelt sind und daß die Lehnenentriegelung (11) und die Bodenentriegelung (24) unabhängig voneinander betätigbar sind.

4. Entriegelungsmechanik nach Anspruch 3, **dadurch gekennzeichnet, daß** die Lehnenentriegelung (11) und die Bodenentriegelung (24) je eine Übertragungswelle (13, 32) zwischen den beiden Seiten des Fahrzeugsitzes (1) aufweisen, welche nur bei einer der beiden Bewegungsmöglichkeiten des Betätigungselementes (20) in Wirkverbindung miteinander stehen, wobei das Betätigungselement (20) einer von beiden Wellen (13, 32) zugeordnet ist.

5. Entriegelungsmechanik nach Anspruch 4, **dadurch gekennzeichnet, daß** die Wirkverbindung der beiden Wellen (13, 32) über drehfest auf den Wellen (13, 32) angeordnete, in wenigstens einer Längsposition des Fahrzeugsitzes (1) aneinander anliegende Hebel (28, 30) erfolgt.

6. Entriegelungsmechanik nach Anspruch 5, **dadurch gekennzeichnet, daß** eine der beiden Wellen (13, 32) innerhalb einer hohlen Traverse (15) angeordnet ist, welche einen Teil der Struktur des Sitzteiles (2) bildet und welche eine radiale Öffnung (15') für einen der Hebel (28) aufweist.

7. Entriegelungsmechanik nach einem der Ansprüche 1 bis 6, **dadurch gekennzeichnet, daß** das Betätigungselement als ein beweglicher Handhebel (20) ausgebildet ist, welcher bei einer Bewegung aus einer Ruhestellung heraus in eine erste Betätigungsrichtung die Lehnenentriegelung (11) auslöst und bei einer Bewegung aus der Ruhestellung heraus in eine zweite Betätigungsrichtung die Bodenentriegelung (24) auslöst.

8. Entriegelungsmechanik nach Anspruch 7, **dadurch gekennzeichnet, daß** der Handhebel (20) am Fahrzeugsitz (1) drehbar gelagert ist und die zwei Betätigungsrichtungen zwei entgegengesetzten Drehrichtungen entsprechen.

9. Entriegelungsmechanik nach Anspruch 8, **dadurch gekennzeichnet, daß** die beiden Drehrichtungen durch Leerhübe des Handhebels (20) entkoppelt sind.

10. Entriegelungsmechanik nach Anspruch 9, **dadurch gekennzeichnet, daß** für die Leerhübe des Handhebels (20) Schlitz-Zapfen-Führungen (17', 19, 26', 28') vorgesehen sind.

11. Fahrzeugsitz, insbesondere Kraftfahrzeugsitz, welcher durch Zusammenklappen von Sitzteil (2) und Rückenlehne (3) von wenigstens einer Sitzstellung in eine Packagestellung überführbar ist, **gekennzeichnet durch** eine Entriegelungsmechanik (11, 20, 24) nach einem der Ansprüche 1 bis 10.
